Europäisches Patentamt

European Patent Office

Office européen des brevets

(19)

(11) Numéro de publication : **0 094 717**
**B1**

(12) # FASCICULE DE BREVET EUROPÉEN

(45) Date de publication du fascicule du brevet :
11.02.87

(51) Int. Cl.⁴ : **H 04 L 11/16**

(21) Numéro de dépôt : 83200663.9

(22) Date de dépôt : 06.05.83

(54) **Procédé et dispositif d'allocation déterministe explicite du jeton dans un réseau local distribué de transmission avec priorités.**

(30) Priorité : 18.05.82 FR 8208685

(43) Date de publication de la demande :
23.11.83 Bulletin 83/47

(45) Mention de la délivrance du brevet :
11.02.87 Bulletin 87/07

(84) Etats contractants désignés :
DE FR GB IT SE

(56) Documents cités :
IEEE DIGEST OF PAPERS, COMPCON SPRING 1982
TWENTY-FOURTH IEEE COMPUTER SOCIETY INTER-
NATIONAL CONFERENCE, San Francisco, 22-25
février 1982, pages 115-120, IEEE, New York, USA; M.
STIEGLITZ: "An LSI token controller"
IEEE ELECTRO, vol. 7, mai 1982, pages 17/1 1-11, New
York, USA; T.J. HARRISON: "IEEE project 802: Local
area network standard"
IEEE PROCEEDINGS OF THE ANNUAL SYMPOSIUM
ON COMPUTER ARCHITECTURE, 20-22 janvier 1975,
Symp. 2, pages 1-6, IEEE, New York, USA; L. NISNE-
VICH et al.: "Decentralized priority control in data
communication"

(73) Titulaire : **S.A. PHILIPS INDUSTRIELLE ET COMMER-
CIALE**
**50 Avenue Montaigne**
**F-75008 Paris (FR)**
**FR**
**N.V. Philips' Gloeilampenfabrieken**
**Groenewoudseweg 1**
**NL-5621 BA Eindhoven (NL)**
**DE GB IT SE**

(72) Inventeur : **Segarra, Gérard**
**Société Civile S.P.I.D. 209, rue de l'Université**
**F-75007 Paris (FR)**

(74) Mandataire : **Charpail, François et al**
**Société Civile S.P.I.D. 209, rue de l'Université**
**F-75007 Paris (FR)**

**0 094 717**

## Description

La présente invention concerne un procédé d'allocation d'un droit à émettre aux différentes stations qui font partie d'un réseau de communication décentralisé, lesquelles stations étant chacunes reliées à un canal pour le transit de données, le droit à émettre étant alloué au moyen d'un jeton (Token) aux différentes stations selon un ordre à déterminer, à chaque station est attribué au moins un niveau de priorité, pour la fréquence d'allocation du jeton, les stations qui possèdent un même niveau de priorité font partie d'un même groupe, le réseau comportant au moins deux groupes différents.

Un tel procédé est par exemple décrit dans l'article de M. Stieglitz intitulé « An LSI token Controller » paru dans IEEE Digest of Papers, Compcon Spring 1982 Twenty Fourth IEEE Computer Society International Conference, 22-25 février 1982 San Francisco Californie, pages 115-120. Les différentes stations font partie d'un réseau de communication décentralisé, ce qui implique que contrairement à un réseau de communication centralisé il n'y a pas de station pilote qui gère le protocole d'accès au canal des différentes stations. Le jeton circule sur le canal et donne selon un ordre déterminé le droit à émettre aux différentes stations. Cet ordre déterminé n'est pas nécessairement l'ordre suivant lequel les stations sont physiquement connectées au réseau, mais c'est un ordre logique.

En général, il y a plusieurs modes de transmission du jeton. La transmission du jeton peut s'effectuer selon un premier mode dit aléatoire comme dans le procédé connu sous le nom de CSMACD (Carrier Sense Multiple Access with Collision Detection) ; procédé suivant lequel chaque station peut revendiquer le jeton à tout instant.

La transmission du jeton peut aussi s'effectuer selon un deuxième mode dit déterministe, soit de manière implicite comme dans le procédé décrit dans la demande de brevet français n° 81 07 558, soit de manière explicite au moyen d'une trame particulière de transmission du jeton contenant l'adresse fonctionnelle ou physique de la station à laquelle le jeton va être alloué.

Le procédé selon la présente invention s'applique à la transmission du jeton selon le dit mode déterministe explicite. Certaines stations sont prioritaires par rapport à d'autres, ce qui implique que lors d'un cycle d'allocation du jeton pendant lequel toutes les stations auront reçu le droit à émettre, ces stations prioritaires recevront ce droit plus souvent que d'autres.

Selon le procédé de l'article cité ci-dessus, l'on diffère l'utilisation du jeton alloué aux stations moins prioritaires pour allouer le jeton plus souvent aux stations prioritaires. Le désavantage de ce procédé est que lorsqu'il y a des stations qui ont un niveau de priorité très élevé, les stations qui ont un faible niveau de priorité ne font que transmettre le jeton sans l'utiliser ce qui crée une surcharge du réseau qui retarde l'allocation du jeton aux stations prioritaires.

Dans les procédés déterministes explicites connus toutes les stations sont sur le même anneau logique, chaque station connaît à chaque instant son successeur bien que, au fur et à mesure de la mise en route et de l'arrêt des différentes stations, le successeur d'une station puisse changer dans le temps. En tout état de cause, les procédés connus ne prévoient de connecter les stations du réseau qu'à une seule adresse, de plus, le jeton ne circule sur le canal que de manière cyclique, de telle sorte qu'une station est obligée d'attendre que son prédécesseur lui transmette le jeton pour pouvoir émettre.

Ces caractéristiques des procédés connus ne vont pas sans inconvénients car il arrive souvent que certaines stations aient besoin d'émettre à des intervalles de temps bien déterminés. Le procédé selon la présente invention a pour but de remédier à ces inconvénients.

En effet, selon la présente invention, un procédé d'allocation d'un droit à émettre est particulièrement remarquable en ce que, les stations d'un même groupe sont assignées à un même anneau logique pour la circulation du jeton, lequel jeton circule successivement de station en station d'un même anneau logique et lorsque le jeton a été alloué à toutes les stations d'un même anneau logique, il passe dans un autre anneau logique assigné à un groupe de stations ayant un niveau de priorité inférieur, laquelle circulation du jeton dans un premier anneau logique est interrompue sous contrôle d'un signal d'interruption engendré par la station en possession du jeton lorsqu'un intervalle de temps entre deux allocations successives du jeton à une station assignée à un deuxième anneau logique ayant un niveau de priorité supérieur à celui du premier anneau logique s'est écoulé, lequel jeton passe sous contrôle du signal d'interruption vers ledit deuxième anneau logique.

En assignant à un même anneau logique les stations d'un même groupe, le jeton va circuler successivement dans chaque anneau logique et les stations affectées au second anneau logique obtiendront le jeton avant les autres stations ; de plus, la circulation du jeton dans le premier anneau logique sera systématiquement interrompue sous contrôle du signal d'interruption pour être affecté à nouveau au second anneau logique ainsi les stations du second anneau logique recevront le jeton plus souvent que les autres. La priorité d'une station par rapport aux autres est souvent liée à un intervalle de temps ce qui signifie que le temps entre deux allocations successives d'une même station est prédéterminé et doit être respecté. En engendrant le signal d'interruption chaque fois que cet intervalle de temps se sera écoulé la station en question sera desservie en temps requis.

Le jeton circule ainsi d'anneau logique en anneau logique, en priorité dans l'anneau logique auquel est assigné le groupe de stations ayant le plus haut niveau prioritaire, puis de proche en proche jusqu'à l'anneau logique auquel est assigné le groupe de stations ayant le niveau prioritaire le plus bas. L'on

**0 094 717**

respecte ainsi les priorités tout en donnant à chacun le droit d'émettre avec une certaine régularité.

Une forme préférentielle d'un procédé d'allocation selon l'invention est particulièrement remarquable en ce que lors du retour du jeton au premier anneau logique après circulation dans le second anneau logique, le droit à émettre est alloué en premier lieu à la station qui possédait ce droit à émettre lors de l'apparition du signal d'interruption. En opérant ainsi on évite qu'il n'y ait des stations qui ne soient que rarement desservies.

De préférence un procédé d'allocation selon l'invention est caractérisé en ce que pour chaque groupe de stations assignées à un même anneau logique il y a une station désignée pour recevoir en premier lieu le droit à émettre lorsque le jeton passe d'un anneau logique à l'autre sous contrôle dudit signal d'interruption.

Le passage du jeton peut ainsi s'effectuer simplement par l'envoi du jeton à cette première station.

Une autre forme préférentielle d'un procédé d'allocation selon l'invention est particulièrement remarquable en ce que ledit intervalle de temps entre deux allocations successives du jeton correspond à l'intervalle de temps prédéterminé entre deux allocations successives du jeton à ladite station désignée pour recevoir en premier lieu le droit à émettre.

De préférence, le temps dudit intervalle de temps est inférieur à 10 millisecondes.

L'invention concerne aussi un réseau de communication décentralisé comportant une pluralité de stations lesquelles stations étant chacunes reliées à un canal pour le transit de données, chaque station comportant des moyens d'allocation d'un jeton pour recevoir lorsque le jeton lui est alloué le droit d'émettre un message sur le canal, et pour organiser le transfert du jeton vers une station prédéterminée, à chaque station est attribué au moins un niveau de priorité pour la fréquence d'allocation du jeton, les stations qui possèdent un même niveau de priorité font partie d'un même groupe, le réseau comportant au moins deux groupes différents.

Un réseau de communication selon l'invention est particulièrement remarquable en ce que les stations d'un même groupe sont assignées à un même anneau logique, ladite station prédéterminée vers laquelle le transfert du jeton est organisé étant une prochaine station du même anneau logique ou une station d'un anneau logique assigné à un niveau de priorité inférieur au cas où le jeton a été alloué à toutes les stations de cet anneau logique, à chaque niveau de priorité correspond un intervalle de temps prédéterminé, lequel intervalle de temps correspond au temps écoulé entre deux allocations successives du jeton aux moyens d'allocation d'une station d'un groupe assigné audit niveau de priorité correspondant, les stations auxquelles est attribué un niveau de priorité inférieur au plus haut niveau de priorité, comportent un dispositif de comptage de temps pour le comptage du temps desdits intervalles de temps correspondant aux niveaux de priorité supérieurs à celui de la station même, lequel dispositif de comptage est pourvu pour engendrer un signal d'interruption lorsqu'un des dits intervalles de temps s'est écoulé, lequel dispositif de comptage étant relié aux dits moyens d'allocation d'un jeton pour la transmission dudit signal d'interruption et d'une indication indiquant de quel niveau de priorité l'intervalle de temps s'est écoulé, lesquels moyens d'allocation d'un jeton étant pourvu pour interrompre sous contrôle dudit signal d'interruption ledit transfert du jeton vers ladite station prédéterminée et organiser le transfert du jeton vers une station du groupe indiqué par ladite indication.

Ainsi on obtient un réseau de communication décentralisé où la priorité pour l'allocation du jeton à des stations ayant un niveau de priorité supérieur est basé sur l'écoulement d'un intervalle de temps.

Une forme préférentielle d'un réseau de communication selon l'invention est caractérisée en ce que le dispositif de comptage de temps comporte pour chaque groupe d'un niveau de priorité supérieur à celui de la station à laquelle il appartient un élément de comptage de temps. Chaque élément de comptage comptant le temps dudit intervalle de temps du groupe auquel il est assigné.

De préférence, un réseau de communication selon l'invention comporte deux anneaux logiques.

Un réseau de communication selon l'invention est particulièrement remarquable en ce que l'élément de comptage de temps est un élément de comptage repositionable sous contrôle du signal d'interruption.

L'invention sera maintenant décrite au moyen des figures suivantes :

La figure 1 montre un schéma logique d'un réseau de communication.

La figure 2 montre un exemple d'une station faisant partie d'un réseau de communication selon l'invention.

La figure 3 illustre le passage du jeton d'un anneau logique à l'autre.

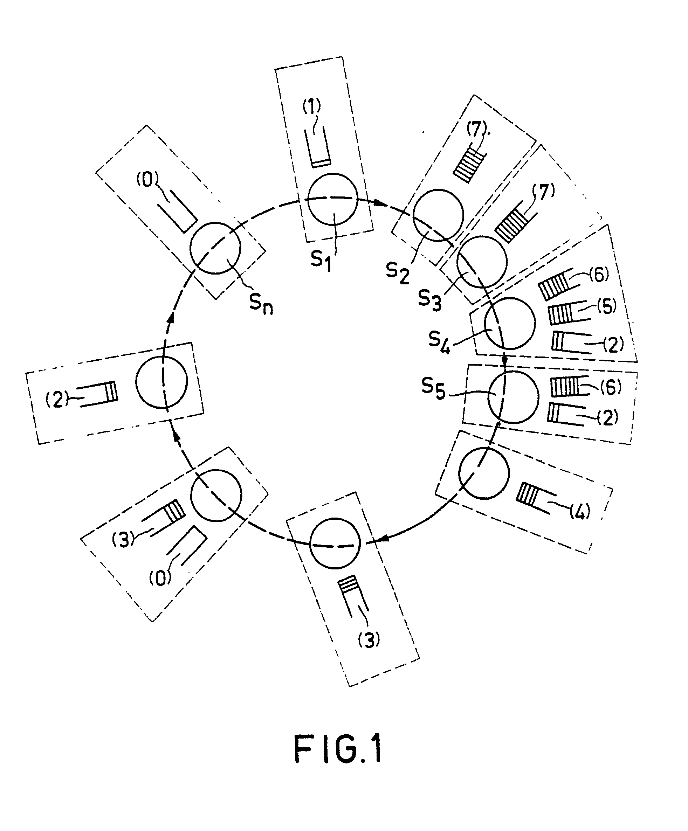

La figure 1 montre un schéma logique d'un réseau de communication. Par schéma logique l'on comprend un schéma dans lequel les différentes stations sont disposées dans l'ordre dans lequel elles sont adressées successivement. Ce schéma logique ne correspond pas forcément au schéma physique c'est-à-dire que les stations ne sont pas forcément adressées dans l'ordre dans lequel elles sont physiquement connectées au réseau. Les différentes stations (S1, S2, ... Sn) ne sont pas forcément physiquement différentes, ainsi par exemple la station Si peut être physiquement la même que la station Sn, ce qui signifie que durant un cycle d'allocation cette même station physique sera adressée à deux reprises. Lorsqu'une station est adressée elle a le droit — et dans certains cas elle a même le devoir — d'émettre un ou plusieurs messages sur le canal qui sert de support pour la transmission des messages dans le réseau de communication.

La logique d'accès au canal est basée sur un jeton ou un « droit à émettre » qui circule dans le réseau. Une logique d'accès au canal basée sur un jeton est par exemple décrite dans l'article de

3

**0 094 717**

D. D. Clark, K. T. Pogran et D. P. Reed intitulé « An introduction to local area Networks » et paru dans « Proceedings of the IEEE », Vol. 66, No. 11, november 1978, pages 1491 à 1517, plus spécialement le paragraphe B « Network control Structures » à la page 1501. Quand une station détient le jeton elle peut — elle a même, dans certains cas, le devoir — d'émettre un ou plusieurs messages et/ou de transmettre le jeton à une autre station, d'autre part, quand une station n'a pas le jeton elle « écoute » les messages transitant sur le réseau et parmi tous ces messages, elle « guette » plus spécialement les messages qui gèrent la transmission du jeton. Le jeton lui-même est par exemple constitué d'un message de la forme suivante :

| Préambule | Format de trame | DA | SA | FCS |
|---|---|---|---|---|

Le préambule peut contenir des bits d'autosynchronisation, des bits de contrôle, etc.

Le format de trame indique ici que ce message est le jeton. DA indique l'adresse de la station destinatrice du jeton. SA indique l'adresse de la station qui a eu le jeton en dernier lieu et qui a émis le jeton sur le canal. FCS ce sont des bits de contrôle (voir à ce sujet par exemple le livre Orange Tome VIII.2 du CCITT dont en particulier le paragraphe 2.2.7).

Selon l'invention chaque station peut être assignée à un ou plusieurs niveaux de priorité en fonction de la (des) priorité(s) d'émission désirée(s). Ainsi il peut y avoir par exemple huit niveaux de priorité (numérotés de 0 à 7) ; ces niveaux de priorité sont indiqués sur les différentes stations de la figure 1 au moyen d'échelles de priorité, le nombre de marches d'une échelle indique le niveau de priorité (les niveaux de priorité sont aussi chaque fois indiqués entre parenthèses).

Ainsi par exemple dans la figure 1 le niveau de priorité « 1 » est assigné à la station S1 et le niveau de priorité « 7 » est assigné aux stations S2 et S3, ces stations n'étant assignées qu'à un seul niveau de priorité, par contre la station S4 est assignée à trois niveaux de priorité notamment les niveaux « 2, 5 et 6 ». Plus le (ou les) niveau(x) de priorité d'une station est (sont) élevé(s), plus souvent elle obtiendra le jeton.

L'assignation d'un ou de plusieurs niveaux de priorité à une station s'effectue par exemple sur base de la ou des fonctions de la station en question. Ainsi par exemple pour la station S5 le niveau de priorité 2 est assigné lorsque la station est consommateur de service et le niveau de priorité 6 est assigné lorsque la station est producteur de service.

Afin de mieux comprendre l'assignation d'un ou de plusieurs niveaux de priorité à une station, examinons le cas d'un réseau local comportant parmi d'autres types de stations, d'une part une ou plusieurs stations de type consommateur de service et d'autre part, une ou plusieurs stations de type producteur de service.

Un exemple typique de producteur est une station capable de fournir à un consommateur des documents, textes et/ou figures, de format A4 ou autre, ces documents étant stockés par exemple sous forme d'enregistrements optiques digitaux comportant entre 1 et 4 Mégabits ; ce type de producteur sera appelé DOR (Digital Optical Recorder) dans la suite du texte.

Le débit d'un DOR étant de l'ordre de 2,4 Mégabits par seconde, alors que le débit du réseau étant par exemple de l'ordre de 4 Mégabits par seconde, si l'on veut limiter pour des raisons de coût la taille du tampon de sortie du DOR à, par exemple, 16 kilobits (2 K byte), le tampon de sortie sera plein au bout de 16 000/2 400 000 = 6,66 millisecondes, il faudra donc que le DOR obtienne le jeton toutes les 6 millisecondes (6 < 6,66), pour pouvoir vider son tampon de sortie en émettant une trame de 16 kilobits à destination du consommateur ; l'ensemble des trames reçues par le consommateur lui permettra de reconstituer l'image, et, par exemple, de l'afficher sur un écran.

On voit bien, dans cet exemple chiffré non limitatif, que pour des raisons d'économie de réalisation — tampon de sortie limité à 16 K bits — il faut que le jeton soit impérativement alloué au DOR au bout d'un temps prédéterminé qui serait ici de 6 millisecondes ; le DOR doit bénéficier d'une priorité.

A part la raison d'économie, il peut y avoir des raisons de qualité de services — temps total acceptable par le consommateur pour obtenir la transmission de l'image complète — qui nécessitent également de donner une priorité à certaines stations.

Le DOR doit bénéficier d'une priorité d'allocation du jeton car il ne peut attendre que son prédécesseur lui transmette le jeton puisque le temps d'attente serait fonction du nombre de stations connectées sur l'anneau logique et du trafic de ces stations et pourrait donc être supérieur au dit temps prédéterminé de 6 millisecondes.

Une adresse d'une station, laquelle adresse est une adresse logique et non physique, sera composée d'au moins deux parties, une première partie, contenant le niveau de priorité, et une deuxième partie contenant par exemple un numéro indiquant la station en question. Une station assignée à plusieurs niveaux de priorité aura donc plusieurs adresses logiques. Les différentes adresses logiques de cette même station sont par exemple mémorisées dans une table faisant partie de la station en question.

La station active ayant par exemple le plus grand numéro dans sa deuxième partie se reconnaît elle-même comme étant le point d'entrée initial d'un anneau logique comportant toutes les stations d'un même niveau de priorité.

Dans un réseau de communication selon l'invention, le jeton va donc circuler dans un anneau logique et va adresser successivement les différentes stations d'un anneau logique. Le nombre d'anneaux logiques sera égal au nombre de niveaux de priorité.

Le parcours normal du jeton pourrait être de parcourir chaque anneau en entier au moins une fois en commençant par l'anneau le plus prioritaire attaqué par son point d'entrée initial, puis en parcourant successivement les autres anneaux dans l'ordre des priorités décroissantes, mais ce parcours de jeton ne serait qu'une simple transposition des procédés connus.

En fait, selon l'invention, le parcours du jeton dans un anneau va être perturbé par l'interruption due à l'écoulement d'un intervalle de temps prédéterminé ; lors de cet événement, quel que soit l'emplacement du jeton, celui-ci, conformément à l'invention, devra remonter au point d'entrée initial d'un anneau dont les stations sont assignées à un niveau de priorité supérieur à celui du niveau de priorité des stations appartenant à l'anneau dans lequel le jeton circulait lors de l'interruption.

Le parcours du jeton lors de ladite interruption sera maintenant décrit à l'aide d'un exemple dans lequel le réseau de communication possède deux anneaux logiques. Cet exemple n'est nullement limitatif, et l'invention s'applique tout aussi bien à des réseaux de communication qui possèdent plus de deux anneaux logiques. L'option de deux anneaux n'a pour unique but que de rendre la description plus claire.

Dans l'exemple choisi le réseau de communication comporte n stations physiques, lesquelles stations sont à la fois émettrice et réceptrice. Une station peut émettre un message lorsqu'elle est en possession du jeton. Chaque station « écoute » les messages transitant sur le réseau, et prend en compte les messages qui lui sont destinés.

Un premier groupe de stations appartient au premier anneau logique, qui par la suite sera appelé anneau synchrone, et un second groupe de stations qui appartient au deuxième anneau logique appelé anneau asynchrone. L'anneau synchrone a un niveau de priorité supérieur à celui de l'anneau asynchrone.

Comme mentionné auparavant une même station physique peut appartenir à deux anneaux logiques.

Selon l'invention chaque station appartenant à l'anneau synchrone aura le jeton au moins une fois pendant un intervalle de temps prédéterminé, c'est-à-dire au moins une fois tous les 6 millisecondes dans l'exemple du DOR, cité auparavant. Les stations appartenant à l'anneau asynchrone ne pourront disposer du jeton que durant cette partie de l'intervalle de temps prédéterminé qui n'est pas utilisée par les stations de l'anneau synchrone.

Le jeton va circuler dans l'anneau asynchrone suivant le mode séquentiel, c'est-à-dire qu'il va être alloué successivement, par exemple en suivant la numérotation présente dans la deuxième partie de l'adresse, à toutes les stations appartenant à cet anneau asynchrone. Mais lorsque l'intervalle de temps prédéterminé sera écoulé le mode séquentiel sera interrompu et remplacé par le mode d'interruption suivant lequel le jeton sera alloué aux stations appartenant à l'anneau synchrone. Lorsque toutes les stations de l'anneau synchrone seront desservies le jeton repassera dans le mode séquentiel.

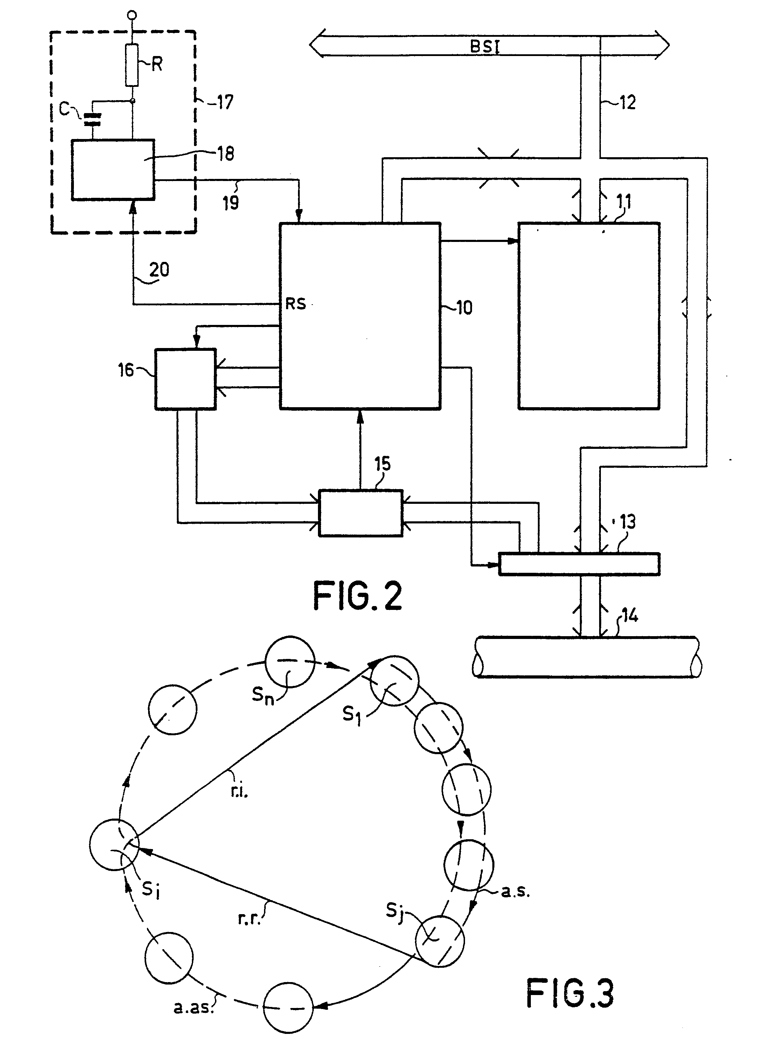

Avant de décrire le passage du jeton du mode séquentiel au mode d'interruption il est nécessaire de décrire quelques éléments essentiels d'une station faisant partie du réseau de communication. La figure 2 illustre un exemple d'une station. Dans la figure 2 ne sont représentés que les éléments qui sont nécessaires à la compréhension de l'invention. Le fonctionnement de la station est régi par une unité de commande 10, par exemple un microprocesseur. Cette unité de commande est reliée par un bus 12 au bus interne (BSI) de la station auquel est, par exemple, aussi connectée la couche supérieure de la station (cette couche supérieure n'est pas illustrée dans la figure 2 pour raison de clarté). Au bus 12, sur lequel circulent des adresses et des données, est aussi connectée une mémoire 11. Cette mémoire est prévue pour emmagasiner temporairement des données en provenance du bus interne BSI, de l'unité de commande, et du canal 14 qui fait partie du réseau de communication.

Le canal est connecté à la station par l'intermédiaire d'un registre à décalage 13. Une sortie du registre à décalage est connectée à une première entrée d'un comparateur 15, dont une seconde entrée est connectée à une sortie d'une table 16. Dans cette table 16 sont emmagasinée(s) la (ou les) adresse(s) de la station ainsi que pour chaque adresse, l'adresse de la station précédente et l'adresse de la station suivante dans l'anneau logique par rapport à la station en question ainsi qu'une variable d'état indiquant si la station a une position particulière dans l'anneau : point d'entrée initial, point de sortie, ... Une entrée de la table est reliée à l'unité de commande 10. Une sortie du comparateur est connectée à l'unité de commande. La station possède aussi un compteur 17 dont une sortie est connectée par la ligne 19 à une entrée de l'unité de commande, tandis qu'une entrée est connectée par la ligne 20 à une sortie RS (RESET) de l'unité de commande.

Lorsque le jeton circule sur le canal 14 la station va vérifier si le jeton lui est adressé. Pour cela la station va charger, via le registre 13 une copie de la partie DA du jeton dans le comparateur 15. Ce comparateur va vérifier si la partie DA du jeton comporte une des adresses de la station mentionnées dans la table 16. Si la partie DA du jeton ne comporte pas une de ces adresses de la station, le résultat de la comparaison, réalisée par le comparateur 15, est négatif et la station n'est donc pas destinatrice, ce qui signifie qu'elle n'a pas le droit d'émettre un message sur le canal. Le comparateur communique cette information « résultat négatif » à l'unité de commande qui va alors attendre le prochain passage du jeton. Dans le cas où la partie DA du jeton comporte une des adresses de la station, le comparateur 15 va communiquer un résultat positif à l'unité de commande 10, ce qui signifie que la station a le droit d'émettre un message sur le canal.

Sous contrôle de l'unité de commande le message à émettre sera prélevé dans la mémoire 11 et émis sur le canal 14. L'unité de commande va aussi modifier le contenu du jeton. Ainsi dans la partie SA du jeton sera chargée l'adresse logique de la présente station, laquelle adresse logique est l'adresse de la présente station par rapport à l'anneau logique sur lequel le jeton circule lorsqu'il est pris en compte par la station. Dans la partie DA du jeton sera chargée, étant entendu que le jeton circule suivant le mode séquentiel, l'adresse logique de la station qui suit immédiatement la présente station sur l'anneau logique en question. Cette adresse, chargée dans la partie DA du jeton, est prélevée dans la table 16. Le jeton, dont le contenu a été modifié est alors émis sur le canal.

Toutefois, comme cité auparavant, le jeton peut passer du mode séquentiel au mode d'interruption. Ce passage se fera chaque fois après écoulement d'un intervalle de temps prédéterminé. La prédétermination de cet intervalle de temps est basée sur la fréquence à laquelle la station la plus prioritaire de l'anneau synchrone doit être en possession du jeton, donc dans l'exemple du DOR toutes les 6 millisecondes. Afin que chaque station puisse connaître de temps prédéterminé chaque station est équipée d'un dispositif de comptage de temps 17. Dans l'exemple de la figure 2 ce compteur est constitué du monostable 18 avec sa constante de temps T déterminée par la résistance R et le condensateur C. Cette constante de temps T est égale audit intervalle de temps prédéterminé. Le choix d'un monostable avec les éléments passifs R et C est un exemple, mais n'importe quel compteur positionable pourrait être utilisé à cette fin.

Supposons maintenant que le jeton circule en mode séquentiel sur l'anneau asynchrone, lorsque l'intervalle de temps prédéterminé est écoulé le dispositif de comptage de temps 17 émet à sa sortie un signal d'interruption qu'il transmet par la ligne 19 à une entrée de l'unité de commande 10. Lorsque l'unité de commande a reçu un tel signal d'interruption, elle va immédiatement vérifier si la station est en possession du jeton. Si la station n'est pas en possession du jeton elle va attendre la diffusion du jeton sur le canal et alors l'unité de commande génèrera un signal de réinitialisation et le transmettra par la ligne 20 à l'entrée du dispositif de comptage de temps 17. Sous contrôle de ce signal de réinitialisation le compteur va redémarrer le comptage de l'intervalle de temps prédéterminé. Si par contre la station est en possession du jeton lors de l'émission d'un signal d'interruption par le dispositif de comptage de temps 17, l'unité de commande 10 de la station va diffuser le jeton dans le réseau vers le point d'entrée initial de l'anneau synchrone et l'unité de commande va générer le signal de réinitialisation et le transmettre à l'entrée du dispositif de comptage de temps 17. L'unité de commande va aussi mémoriser que la station, dont elle fait partie, a été l'objet d'un signal d'interruption et qu'elle fut ainsi la dernière station de l'anneau asynchrone à avoir eu le jeton avant le passage du jeton à l'anneau synchrone.

Cette mémorisation s'effectue par exemple par le positionnement d'un drapeau (flag). Le jeton va maintenant circuler en mode d'interruption sur l'anneau synchrone. Ainsi le jeton est passé du mode séquentiel dans l'anneau asynchrone au mode d'interruption dans l'anneau synchrone. Ce passage de l'anneau asynchrone (a. as) à l'anneau synchrone (a. s) est illustré dans la figure 3.

La station Si fait l'objet d'un signal d'interruption et le jeton passe (r. i .) alors à la station S1 qui fait partie de l'anneau synchrone. Le point d'entrée de l'anneau synchrone va recevoir ainsi le droit d'émettre son message immédiatement après l'écoulement dudit intervalle de temps prédéterminé. Le jeton, qui circule maintenant en mode d'interruption va desservir toutes les stations qui font partie de l'anneau synchrone. Lorsque le jeton est arrivé à la dernière station (station Sj de la figure 3) de l'anneau synchrone, cette station va s'identifier au moyen de sa table 16 comme étant la dernière station de l'anneau synchrone. En effet cette dernière station (Sj) va constater que dans sa table 16 il n'y a pas d'adresse d'une prochaine station sur l'anneau synchrone. Munie de cette information l'unité de commande de cette dernière station va diffuser le jeton vers la station précédemment interrompue. La station, qui a mémorisé (positionnement du drapeau) qu'elle fut la dernière station de l'anneau asynchrone à avoir eu le jeton avant le passage de ce dernier à l'anneau synchrone, va immédiatement prendre le jeton ainsi diffusé.

Cette station, qui est maintenant en possession du jeton, va faire les opérations habituelles d'une station en possession du jeton comme décrit auparavant et le jeton va à nouveau circuler en mode séquentiel jusqu'à ce qu'une nouvelle interruption due à l'écoulement de l'intervalle de temps prédéterminé intervienne à nouveau.

L'exemple d'un réseau de communication à deux anneaux logiques de priorités différentes n'est pas limitatif et l'invention s'applique aussi à des réseaux de communication à plus de deux anneaux logiques de priorités différentes. Cette application plus générale de l'invention sera décrite brièvement ci-dessous. Dans cette application plus générale le parcours du jeton sera interrompu chaque fois qu'un anneau logique d'un niveau prioritaire supérieur à celui de l'anneau logique dans lequel circule le jeton devra être desservi. Chaque station va alors posséder autant de compteurs de temps (tel que le dispositif de comptage de temps 17 dans la figure 2) qu'il y aura d'anneaux logiques ayant un niveau de priorité supérieur à celui de l'anneau logique ayant le niveau de priorité le plus bas auquel appartient ladite station. Chacun de ces compteurs de temps sera alors assigné à un anneau logique bien défini et déterminera l'intervalle de temps prédéterminé de cet anneau logique. Lorsqu'un compteur aura généré un signal d'interruption dû à l'écoulement de son intervalle de temps prédéterminé, le jeton, quel que soit son emplacement, devra remonter au point d'entrée initial de l'anneau logique auquel le compteur est assigné. Cette remontée peut ne pas s'effectuer directement pour sauvegarder les niveaux de retour ; en conséquence, la station interrompue par l'écoulement de l'intervalle de temps prédéterminé transmettra le jeton au point d'entrée initial de l'anneau de priorité immédiatement supérieure à l'anneau sur lequel se trouve la station interrompue. Le point d'entrée ainsi atteint, sachant comme toutes les autres stations du réseau que le temps prédéterminé est écoulé, mémorisera le niveau de priorité de l'anneau qui vient de lui transmettre le jeton puis transmettra immédiatement le jeton à un anneau de priorité supérieure et ainsi de suite jusqu'à ce que le jeton arrive dans l'anneau auquel le compteur, qui a provoqué l'interruption, était assigné.

Bien entendu, l'intervalle de temps prédéterminé aura une valeur telle que additionnée au temps maximum de remontée du jeton, temps qui dépend notamment du nombre d'anneaux logiques, le jeton arrive en temps voulu à l'anneau logique qu'il doit desservir.

Le déclenchement du compteur de temps prédéterminé s'effectue après l'interruption lorsque le jeton commence à circuler sur le canal.

Lorsque le jeton redescendra vers les anneaux logiques les moins prioritaires, il recommencera, à parcourir chaque anneau logique en entier sauf lorsqu'il arrivera sur l'anneau où se trouve la station qui avait été interrompue car, dans ce cas, le jeton sera immédiatement affecté à la station qui n'avait pas pu utiliser le jeton à cause de l'interruption comme décrit auparavant.

Si une deuxième interruption se produit au cours de la descente du jeton avant d'avoir atteint l'anneau précédemment interrompu, le même procédé itératif est exécuté.

Dans le cas d'un réseau comportant par exemple quatre anneaux logiques, une bonne affectation des stations serait : sur l'anneau de priorité 3 — la plus forte — les producteurs DOR ou autres ayant le même type d'exigences ; sur l'anneau de priorité 2, les terminaux synchrones par exemple téléphone digitalisé ; sur l'anneau de priorité 1, les terminaux asynchrones de types producteurs ; sur l'anneau de priorité 0, les terminaux asynchrones de type consommateur.

Dans certains cas il peut être intéressant de dissocier la notion de station et la notion d'adresse de station de telle sorte que, selon un procédé complémentaire au précédent et faisant aussi partie de l'invention, il soit possible qu'une station quelconque possède plusieurs adresses ; chacune de ces adresses d'une même station quelconque est alors, dans le réseau, affectée de la priorité de l'anneau dans lequel elle se trouve ; ainsi une station peut être doublement privilégiée, d'une part grâce à ses adresses multiples, d'autre part grâce au niveau de priorité de chacune de ses adresses ; un autocommutateur téléphonique digitalisé supportant un gros trafic est un bon exemple de station justifiant plusieurs adresses qui, dans ce cas non limitatif, seraient toutes dans le même anneau de priorité 1 ci-dessus décrit.

Durant le déroulement normal du procédé selon l'invention et lorsque la dernière station du dernier anneau a eu le jeton, c'est que le jeton a accompli un cycle complet de l'anneau le moins prioritaire avant que le temps prédéterminé ne se soit écoulé ; dans ce cas, et toujours en restant dans le cadre de l'invention, le procédé comporte deux options : soit le jeton continue à circuler sur l'anneau le moins prioritaire en attendant l'interruption, soit le jeton remonte directement au point d'entrée de l'anneau le plus prioritaire sans attendre l'interruption.

## Revendications

1. Procédé d'allocation d'un droit à émettre aux différentes stations qui font partie d'un réseau de communication décentralisé, lesquelles stations étant chacunes reliées à un canal pour le transit de données, le droit à émettre étant alloué au moyen d'un jeton (token) aux différentes stations selon un ordre à déterminer, à chaque station est attribué au moins un niveau de priorité pour la fréquence d'allocation du jeton, les stations qui possèdent un même niveau de priorité font partie d'un même groupe, le réseau comportant au moins deux groupes différents, caractérisé en ce que, les stations d'un même groupe sont assignées à un même anneau logique pour la circulation du jeton, lequel jeton circule successivement de station en station d'un même anneau logique et lorsque le jeton a été alloué à toutes les stations d'un même anneau logique il passe dans un autre anneau logique assigné à un groupe de stations ayant un niveau de priorité inférieur, laquelle circulation du jeton dans un premier anneau logique est interrompue sous contrôle d'un signal d'interruption engendré par la station en possession du jeton lorsqu'un intervalle de temps entre deux allocations successives du jeton à une station assignée à un deuxième anneau logique ayant un niveau de priorité supérieur à celui du premier anneau logique s'est écoulé, lequel jeton passe sous contrôle du signal d'interruption vers ledit deuxième anneau logique.

2. Procédé d'allocation selon la revendication 1, caractérisé en ce que lors du retour du jeton au premier anneau logique après circulation dans le deuxième anneau logique, le droit à émettre est alloué en premier lieu à la station qui possédait ce droit à émettre lors de l'apparition du signal d'interruption.

3. Procédé d'allocation selon l'une quelconque des revendications précédentes caractérisé en ce que pour chaque groupe de stations assignées à un même anneau logique il y a une station désignée pour recevoir en premier lieu le droit à émettre lorsque le jeton passe d'un anneau logique à l'autre sous contrôle dudit signal d'interruption.

7

**0 094 717**

4. Procédé d'allocation selon la revendication 3, caractérisé en ce que ledit intervalle de temps entre deux allocations successives du jeton correspond à l'intervalle de temps prédéterminé entre deux allocations successives du jeton à ladite station désignée pour recevoir en premier lieu le droit à émettre.

5. Procédé d'allocation selon l'une quelconque des revendications précédentes, caractérisé en ce que le temps dudit intervalle de temps est inférieur à 10 millisecondes.

6. Réseau de communication décentralisé comportant une pluralité de stations lesquelles stations étant chacunes reliées à un canal pour le transit de données, chaque station comportant des moyens d'allocation d'un jeton pour recevoir lorsque le jeton lui est alloué le droit d'émettre un message sur le canal, et pour organiser le transfert du jeton vers une station prédéterminée, à chaque station est attribué au moins un niveau de priorité pour la fréquence d'allocation du jeton, les stations qui possèdent un même niveau de priorité font partie d'un même groupe, le réseau comportant au moins deux groupes différents, caractérisé en ce que les stations d'un même groupe sont assignées à un même anneau logique, ladite station prédéterminée vers laquelle le transfert du jeton est organisé étant une prochaine station du même anneau logique ou une station d'un anneau logique assigné à un niveau de priorité inférieur au cas où le jeton a été alloué à toutes les stations de cet anneau logique, à chaque niveau de priorité correspond un intervalle de temps prédéterminé, lequel intervalle de temps correspond au temps écoulé entre deux allocations successives du jeton aux moyens d'allocation d'une station d'un groupe assigné audit niveau de priorité correspondant, les stations auxquelles est attribué un niveau de priorité inférieur au plus haut niveau de priorité, comportent un dispositif de comptage de temps pour le comptage du temps desdits intervalles de temps correspondant aux niveaux de priorité supérieurs à celui de la station même, lequel dispositif de comptage est pourvu pour engendrer un signal d'interruption lorsque un desdits intervalles de temps s'est écoulé, lequel dispositif de comptage étant relié auxdits moyens d'allocation d'un jeton pour la transmission dudit signal d'interruption et d'une indication indiquant de quel niveau de priorité l'intervalle de temps s'est écoulé, lesquels moyens d'allocation d'un jeton étant pourvu pour interrompre sous contrôle dudit signal d'interruption ledit transfert du jeton vers ladite station prédéterminée et organiser le transfert du jeton vers une station du groupe indiqué par ladite indication.

7. Réseau de communication selon la revendication 6, caractérisé en ce que le dispositif de comptage de temps comporte pour chaque groupe d'un niveau de priorité supérieur à celui de la station à laquelle il appartient un élément de comptage de temps, chaque élément de comptage comptant le temps dudit intervalle de temps du groupe auquel il est assigné.

8. Réseau de communication selon la revendication 6 ou 7, caractérisé en ce que le réseau comporte deux anneaux logiques.

9. Réseau de communication selon la revendication 7, caractérisé en ce que l'élément de comptage de temps est un élément de comptage repositionable sous contrôle du signal d'interruption.

**Claims**

1. A process for allocating a right to transmit to different stations which form part of a decentralized communication network, and each of which is connected to a data traffic channel, the right to transmit being allocated to the various stations by means of a token in an order to be determined, at least one priority level for the allocation frequency of the token being assigned to each station, the stations having the same priority level forming part of the same group and the network comprising at least two different groups, characterized in that the stations of the same group are assigned to the same logic loop for the circulation of the token, said token successively passing from station to station in the same logic loop and, when the token has been allocated to all stations of the same logic loop, it passes to another logic loop assigned to a group of stations having a lower priority level, said circulation of the token in a first logic loop being interrupted under the control of an interrupt signal which is generated by the station possessing the token upon expiration of a time interval between two successive allocations of the token to a station assigned to a second logic loop having a priority level which is higher than that of the first logic loop, said token then passing to said second logic loop under the control of the interrupt signal.

2. An allocation process as claimed in Claim 1, characterized in that when the token returns to the first logic loop after circulation through the second logic loop, the right to transmit is allocated first of all to the station which possessed this right to transmit when the interrupt signal appeared.

3. An allocation process as claimed in any one of the preceding Claims, characterized in that for each group of stations assigned to the same logic loop a station is indicated to first receive the right to transmit when the token passes from one logic loop to another under the control of said interrupt signal.

4. An allocation process as claimed in Claim 3, characterized in that said time interval between two successive allocations of the token corresponds to the predetermined time interval between two successive allocations of the token to said station designated to first receive the right to transmit.

5. An allocation process as claimed in any one of the preceding Claims, characterized in that the duration of said time interval is less than 10 milliseconds.

6. A decentralized communication network comprising a plurality of stations, each of which is connected to a data traffic channel and comprises token allocation means for receiving the right to transmit a message on the channel when the token is allocated thereto, and for organizing the transfer of the token to a predetermined station, at least one priority level for the allocation frequency of the token being assigned to each station, the stations having the same priority level forming part of the same group, and the network comprising at least two different groups, characterized in that the stations of the same group are assigned to the same logic loop, said predetermined station whereto the token is transferred being a next station of the same logic loop or a station of a logic loop assigned to a lower priority level when the token has been allocated to all stations of the former logic loop, with each priority level there being associated a predetermined time interval which corresponds to the period of time expiring between two successive allocations of the token by the allocation means of a station of a group assigned to said associated priority level, the stations having an assigned priority level which is lower than the highest priority level comprising a time counting device for counting the duration of said time intervals corresponding to the priority levels which are higher than that of the station itself, said counting device being provided in order to generate an interrupt signal upon expiration of one of said time intervals and being connected to said token allocation means for the transmission of said interrupt signal and for the transmission of an indication which indicates for which priority level the time interval has expired, said token allocation means being provided in order to interrupt, under the control of said interrupt signal, said transfer of the token to said predetermined station and to organize the transfer of the token to a station of the group indicated by said indication.

7. A communication network as claimed in Claim 6, characterized in that the time counting device comprises a time counting element for each group having a priority level which is higher than that of its own group, each counting element counting the duration of said time interval of the group whereto it is assigned.

8. A communication network as claimed in claim 6 or 7, characterized in that the network comprises two logic loops.

9. A communication network as claimed in claim 7, characterized in that the time counting element is resettable under the control of the interrupt signal.

**Patentansprüche**

1. Verfahren zum Zuweisen des Rechts zum Übertragen von Daten an die verschiedene Stationen, die Teile eines dezentralisierten Kommunikationsnetzes bilden und mit je einem Datenübertragungskanal verbunden sind, wobei das Übertragungsrecht mittels eines Tokens gemäss einer Bestimmungsreihenfolge verschiedenen Stationen gegeben wird, jeder Station zumindest ein Prioritätspegel für die Zuweisungsfrequenz des Tokens gegeben wird, die Stationen mit gleichem Prioritätspegel Teile einer selben Gruppe bilden, wobei das Netz mindestens zwei verschiedene Gruppen enthält, dadurch gekennzeichnet, dass die Stationen einer selben Gruppe für den Umlauf des Tokens einer selben logischen Schleife zugewiesen werden, dieser Token die Stationen derselben logischen Schleife eine nach der anderen durchläuft, und wenn der Token allen Stationen derselben logischen Schleife zugewiesen ist, auf eine andere logische Schleife überwechselt, die einer Gruppe von Stationen mit einem niederen Prioritätspegel zugeordnet ist, wobei dieser Umlauf des Tokens in einer ersten logischen Schleife unter der Steuerung eines von der Station mit dem Token erzeugten Unterbrechersignals unterbrochen wird, wenn ein Zeitintervall zwischen zwei aufeinanderfolgenden Zuweisungen des einer Station mit einer zweiten logischen Schleife zugeordneten Tokens, wobei diese zweite Schleife einen höheren Prioritätspegel, als der der ersten logischen Schleife hat, abgelaufen ist, und dieser Token unter der Steuerung des Unterbrechersignals auf die genannte zweite logische Schleife überwechselt.

2. Zuweisungsverfahren nach Anspruch 1, dadurch gekennzeichnet, dass bei Rückkehr des Tokens zur ersten logischen Schleife nach seinem Umlauf in der zweiten logischen Schleife das Übertragungsrecht zunächst jener Station zugewiesen wird, die beim Erscheinen des Unterbrechersignals dieses Übertragungsrecht hatte.

3. Zuweisungsverfahren nach einem der vorangehenden Ansprüche, dadurch gekennzeichnet, dass es für jede einer selben logischen Schleife zugeordnete Gruppe von Stationen eine Station mit dem Erstübertragungsrecht gibt, wenn der Token unter der Steuerung des Unterbrechersignals von der einen auf eine andere logische Schleife überwechselt.

4. Zuweisungsverfahren nach Anspruch 3, dadurch gekennzeichnet, dass das erwähnte Zeitintervall zwischen zwei aufeinanderfolgenden Zuweisungen des Tokens dem vorgegebenen Zeitintervall zwischen zwei aufeinanderfolgenden Zuweisungen des Tokens in der Station mit dem Erstübertragungsrecht entspricht.

5. Zuweisungsverfahren nach einem oder mehreren der vorangehenden Ansprüche, dadurch gekennzeichnet, dass die Dauer des genannten Zeitintervalls kürzer als 10 ms ist.

6. Dezentralisiertes Kommunikationsnetz mit einer Anzahl von Stationen, die mit je einem Datenübertragungskanal verbunden sind, wobei jede Station Mittel zum Zuweisen eines Tokens für den Empfang enthält, wobei dem Token das Übertragungsrecht für eine Nachricht auf dem Kanal zugeordnet ist, und weiter Mittel zum Organisieren des Wechsels des Tokens auf eine vorgegebene Station enthält, dass jeder Station mindestens ein Prioritätspegel für die Zuweisungsfrequenz des Tokens zugeordnet ist, dass die

9

Stationen mit dem gleichen Prioritätspegel Teile einer selben Gruppe bilden, wobei das Netz mindestens zwei verschiedene Gruppen enthält, dadurch gekennzeichnet, dass die Stationen derselben Gruppe eine selbe logische Schleife zugeordnet sind, wobei die vorgegebene Station, der der Wechsel des Tokens zuorganisiert ist, eine folgende Station derselben logischen Schleife oder eine Station einer logischen Schleife ist, der ein niederer Prioritätspegel zugewiesen ist, wenn der Token allen Stationen dieser logischen Schleife zugewiesen ist, dass jedem Prioritätspegel ein vorgegebenes Zeitintervall entspricht, das der zwischen aufeinanderfolgenden Zuweisungen des Tokens in den Zuweisungsmitteln einer Station einer dem entsprechenden Prioritätspegel zugeordneten Gruppe abgelaufenen Zeit entspricht, wobei die Stationen, denen ein niederer Prioritätspegel als der höhere Prioritätspegel zugeordnet ist, einen Zeitlängenzähler zum Zählen der Dauer der Zeitintervalle entsprechend der Prioritätspegel höher als der Station selbst enthalten, dass der Zeitlängenzähler zum Erzeugen eines Unterbrechersignals vorgesehen ist, wenn eines der genannten Zeitintervalle abgelaufen ist, wobei der Zähler mit den Mitteln zum Zuweisen eines Tokens für die Übertragung des erwähnten Unterbrechersignals und einer Anzeige verbunden ist, die den Prioritätspegel angibt, bei dem das Zeitintervall abgelaufen ist, wobei die Mittel zum Zuweisen eines Tokens Unterbrechen des Wechsels des Tokens auf die genannte vorgegebene Station unter der Steuerung des erwähnten Unterbrechersignals und zum Organisieren des Wechsels des Tokens auf eine Station der von dieser Anzeige angegebenen Gruppe vorgesehen sind.

7. Kommunikationsnetz nach Anspruch 6, dadurch gekennzeichnet, dass der Zeitlängenzähler für jede Gruppe eines Prioritätspegels höher als der der Station, zu der er gehört, einen Zeitlängenzählelement enthält, wobei jedes Zählelement die Dauer des genannten Zeitintervalls der Gruppe zählt, zu der es gehört.

8. Kommunikationsnetz nach Anspruch 6 oder 7, dadurch gekennzeichnet, dass das Netz zwei logische Schleifen enthält.

9. Kommunikationsnetz nach Anspruch 7, dadurch gekennzeichnet, dass das Zeitlängenzählelement ein unter der Steuerung des Unterbrechersignals neupositionierbares Zählelement ist.

FIG.1

FIG.2

FIG.3

2